# FASCICULE DE BREVET EUROPEEN

(11) **EP 3 967 647 B1**
(45) Date de publication et mention de la délivrance du brevet: **19.07.2023**
(21) Numéro de dépôt: 21189276.5
(22) Date de dépôt: 03.08.2021
(51) Int. Cl.: B67D 7/40, B67D 7/32, B67D 7/38

(54) **STATION DE REMPLISSAGE DE RÉSERVOIRS DE GAZ**
FÜLLSTATION FÜR GASTANKS
STATION FOR FILLING GAS TANKS

(30) Priorité: 10.09.2020 FR 2009149
(43) Date de publication de la demande: 16.03.2022
(73) Titulaire: L'Air Liquide, société anonyme pour l'Étude et l'Exploitation des procédés Georges Claude, 75007 Paris (FR)
(72) Inventeur: VEMPAIRE, David, 38360 SASSENAGE (FR); WERLEN, Etienne, 38360 SASSENAGE (FR)
(74) Mandataire: Air Liquide

(56) Documents cités:
- WO-A1-00/61490
- BE-A- 554 752
- US-A- 2 225 271
- US-A- 2 776 093

## Description

L'invention concerne une station de remplissage de réservoirs de gaz.

L'invention concerne plus particulièrement une station de remplissage de réservoirs de gaz comprenant une source de gaz, un circuit comprenant une extrémité amont reliée à la source et une extrémité aval comprenant une portion flexible dont la terminaison est destinée à être raccordée au réservoir(s) à remplir, le circuit comprenant entre la source et l'extrémité aval, un raccord de sécurité à fermeture automatique agencé selon un axe de travail, ledit raccord de sécurité assurant une fermeture automatique du circuit en cas de traction déterminée dudit raccord de sécurité selon son axe de travail, la station comprenant un carter de distribution, le raccord de sécurité étant disposé dans le carter de distribution avec orientation déterminée de l'axe de travail, au moins une partie de la portion flexible de l'extrémité aval du circuit faisant saillie hors du carter de distribution, le carter de distribution comprenant un organe de guidage d'une zone de la portion flexible.

Lors d'un remplissage du réservoir d'hydrogène gazeux (ou liquide) d'un véhicule, le pistolet (ou buse) terminal est raccordé au véhicule. C'est à l'utilisateur de penser à déconnecter le pistolet en fin de remplissage. S'il oublie et repart avec son véhicule avec le pistolet raccordé, l'arrachement du flexible et l'endommagement du distributeur est possible.

Afin d'éviter des dommages au flexible et au distributeur, un système de désaccouplement est nécessaire. De nombreux systèmes existent utilisant des raccords de sécurité (« breakaway » en anglais) qui assurent la fermeture du circuit en cas de démarrage de la voiture alors que le pistolet est toujours connecté. La déconnexion est alors automatique, que le système soit sous pression ou non. Les raccords de sécurité sont réutilisables et peuvent être reconnectés en toute sécurité.

Les système connus imposent que l'effort de traction exercé soit dans l'axe de travail du système du raccord de sécurité (ou avec un angle faible c'est-à-dire compris entre zéro et trente degrés). Dans des systèmes de sécurité connus, le raccord de sécurité est intégré au pistolet.

Selon une autre configuration connue dite de « montage fixe », le raccord de sécurité est fixé en général en position verticale à une hauteur de 2-3 mètres du sol avec une connexion du flexible vers le bas. Cependant, lors de l'arrachement, un angle important par rapport à la verticale est possible et donc un angle important par rapport à l'axe du raccord de sécurité. Cet angle est en général supérieur à 45 degrés. Cela est en dehors des conditions de fonctionnement optimales du système de désaccouplement et des dysfonctionnements pourraient apparaître entraînant une situation dangereuse.

Dans une autre configuration connue, le raccord de sécurité est disposé en ligne entre deux flexibles: le flexible qui le relie au distributeur et le flexible qui le relie au véhicule. Ce système a l'avantage de se mettre dans l'axe lorsque le flexible est mis sous tension et donc le système d'arrachement fonctionne correctement. Néanmoins, le flexible reliant le raccord de sécurité au distributeur est toujours en mouvement lorsque l'utilisateur manipule le pistolet. Cela entraine une usure d'un deuxième flexible.

De tels systèmes sont connus des documents WO 00/61490, US 2 776 093, US 2 225 271 et BE 554 752.

Un but de la présente invention est de pallier tout ou partie des inconvénients de l'art antérieur relevés ci-dessus. A cette fin, la station selon l'invention, par ailleurs conforme à la définition générique qu'en donne le préambule ci-dessus, est essentiellement caractérisé en ce que l'organe de guidage comprend un ensemble de paroi(s) déflectrice(s) convergente (s) vers une zone centrale de passage assurant le maintien localisé de la portion flexible, la portion du circuit située entre le raccord de sécurité et l'organe de guidage étant orientée au moins sensiblement selon l'axe de travail du raccord de sécurité, l'ensemble de paroi(s) déflectrice(s) de l'organe de guidage étant configuré pour assurer en outre un report, selon l'axe de travail du raccord de sécurité, d'au moins une partie des efforts de traction sur la portion flexible orientés transversalement par rapport à l'axe de travail du raccord de sécurité.

Ceci permet de disposer d'un raccord de sécurité qui peut être logé de façon rigide et fixe dans un distributeur de station 1. De plus, l'arrachement éventuel du flexible est ainsi réalisé tout le temps dans l'axe de travail du raccord de sécurité, quel que soit le sens du départ d'un véhicule (vers l'avant et l'arrière) qui partirait sans se déconnecter et quel que soit le côté du remplissage (gauche ou droite) d'un véhicule.

Par ailleurs, des modes de réalisation de l'invention peuvent comporter l'une ou plusieurs des caractéristiques suivantes :
- l'ensemble de paroi(s) déflectrice(s) comprend une ou des parois courbes ayant un rayon de courbure compris entre 5mm et 300mm,
- l'ensemble de paroi(s) déflectrice(s) comprend au moins une paroi fixe,
- l'ensemble de paroi(s) déflectrice(s) comprend au moins une paroi mobile, notamment un rouleau monté sur un axe mobile en rotation sur lui-même,
- l'ensemble de paroi(s) déflectrice(s) comprend au moins deux parois latérales orientée verticalement et formant des butées latérales de part et d'autre de la portion flexible,
- l'ensemble de paroi(s) déflectrice(s) comprend au moins l'un parmi : une paroi supérieure orientée horizontalement et formant une butée verticale au-dessus de la portion flexible, une paroi inférieure orientée horizontalement et formant une butée verticale en-dessous de la portion flexible,
- le raccord de sécurité est disposé dans le carter avec orientation parallèle ou sensiblement parallèle à l'axe de travail,
- le raccord de sécurité est disposé dans le carter à une hauteur comprise entre 5cm et 3m et de préférence entre 50cm et 1m par rapport au sol,
- la source de gaz contient un gaz carburant comprenant ou constitué d'hydrogène sous forme liquide et/ou sous forme gazeuse.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue de côté, schématique et partielle, illustrant un exemple de structure de station selon l'invention,
[Fig. 2] représente une vue en coupe verticale, schématique et partielle, illustrant un exemple de réalisation d'un détail de la station selon l'invention,
[Fig. 3] représente une vue en perspective, schématique et partielle, illustrant un exemple de réalisation d'un détail d'un organe de guidage de la [Fig. 2],
[Fig. 4] représente une vue en perspective, schématique et partielle, illustrant un exemple de structure de station selon l'invention,
[Fig. 5] représente une vue en perspective, schématique et partielle, illustrant un autre exemple de réalisation d'une partie d'une station selon l'invention.

La station 1 de remplissage de réservoirs de gaz illustrée comprend une source 2 de gaz, un circuit 3 comprenant une extrémité amont 4 reliée à la source 2 et une extrémité aval 5 comprenant une portion flexible dont la terminaison est destinée à être raccordée au(x) réservoir(s) 6 à remplir (par exemple via une buse ou un pistolet).

Le circuit 3 comprend en outre, entre la source 2 et l'extrémité aval 5, un raccord 7 de sécurité à fermeture automatique monté selon un axe de travail. Ce raccord 7 de sécurité est configuré pour assurer une fermeture automatique du circuit 3 (et une séparation du circuit en deux parties le cas échéant) en cas de traction déterminée dudit raccord 7 de sécurité selon son axe de travail.

La station 1 comprend un carter 8 de distribution, le raccord 7 de sécurité étant disposé (fixé par exemple) dans le carter 8 de distribution avec une orientation déterminée de l'axe de travail par exemple horizontale dans l'exemple représenté.

Au moins une partie de la portion flexible de l'extrémité 5 aval du circuit fait saillie hors du carter 8 de distribution. De plus, le carter 8 de distribution comprend un organe 9 de guidage d'une zone de la portion flexible.

L'organe 9 de guidage comprend un ensemble de paroi(s) 10 déflectrice(s) convergente(s) vers une zone centrale de passage du flexible et assurant le maintien localisé de la portion flexible. L'organe 9 de guidage maintient la portion du circuit 3 située entre le raccord 7 de sécurité et l'organe 9 de guidage au moins sensiblement selon l'axe de travail du raccord 7 de sécurité (c'est-dire sensiblement horizontale dans cet exemple de réalisation, le terme « sensiblement » signifiant par exemple qu'un léger angle de zéro à trente degrés et de préférence de zéro à dix degrés par rapport à l'axe de travail peut être possible).

L'ensemble de paroi(s) 10 déflectrice(s) de l'organe 9 de guidage est en outre configuré pour assurer un report, selon l'axe de travail du raccord 7 de sécurité, d'au moins une partie des efforts de traction exercés sur la portion flexible orientés transversalement par rapport à l'axe de travail du raccord 7 de sécurité. C'est-à-dire que, en cas de traction sur l'extrémité aval du circuit (véhicule qui part sans se déconnecter), même si le flexible fait un angle A important avec l'axe de travail du raccord 7 de sécurité, l'organe 9 de guidage forme un système de déflexion, de préférence multidirectionnel, qui reporte les efforts dans l'axe de travail du raccord 7 de sécurité et notamment permet au flexible d'échapper les angles du carter 8 distributeur. C'est-à-dire que, de préférence, la portion flexible repose uniquement sur l'ensemble de paroi(s) de l'organe 9 de guidage quelle que soit l'orientation de la partie aval de la portion flexible. Par exemple, l'organe 9 de guidage peut faire saillie par rapport à la face du carter 8 distributeur sur laquelle l'organe 9 de guidage débouche.

La sécurité de la station 1 est améliorée. En effet, lorsque le véhicule part vers l'avant ou vers l'arrière, le système de déflexion permet de retransmettre les efforts dans l'axe de travail du raccord 7 de sécurité. La station 1 est également plus flexible, car le système permet un accès aux véhicules dans les deux sens, ce qui n'est aujourd'hui pas possible en toute sécurité sur les installations existantes.

Par exemple, l'ensemble de paroi(s) 10 déflectrice(s) comprend une ou des parois courbes ayant un rayon de courbure compris entre 5mm et 300mm_par exemple (sans que cette gamme soit limitative). Par exemple, l'ensemble de paroi(s) 10 déflectrice(s) forme un tube ou une partie de tube convergent (rayon de courbure qui diminue vers l'extrémité amont).

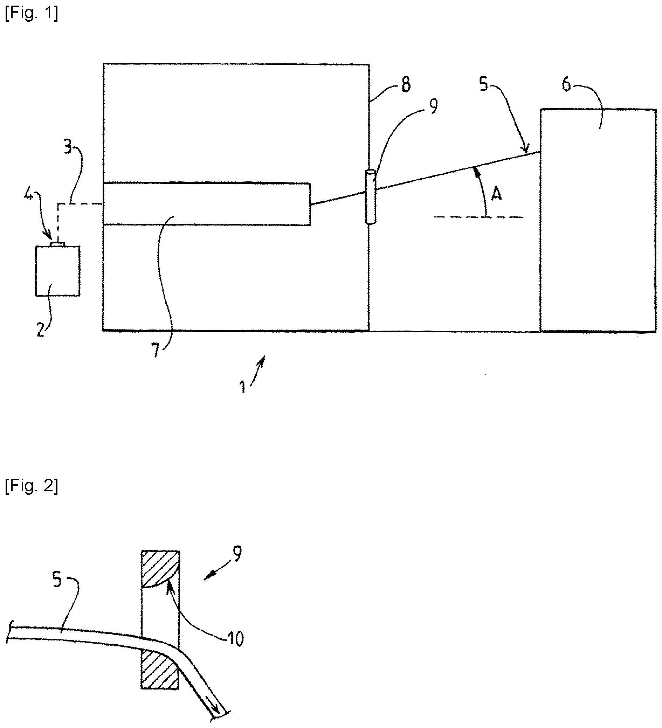

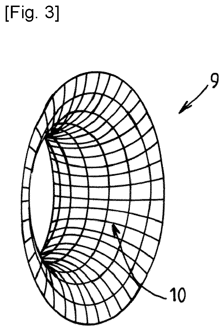

Comme illustré aux [Fig. 2] et [Fig. 3], l'ensemble de paroi(s) 10 déflectrice(s) peut comporter une section de tore (ou un tore entier).

L'ensemble de paroi(s) 10 déflectrices comprend par exemple au moins une paroi fixe.

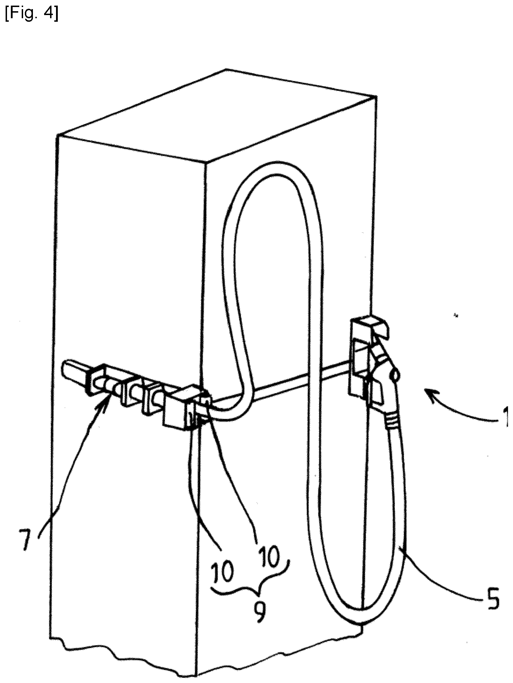

Alternativement ou en combinaison l'ensemble de paroi(s) 10 déflectrice(s) peut comprendre au moins une paroi mobile par exemple un rouleau monté sur un axe (mobile ou fixe) et en rotation autour de cet axe. Comme illustré à la [Fig. 4], l'organe 9 de guidage peut comprendre deux paroi(s) 10 déflectrices latérales orientées verticalement et formant des butées latérales de part et d'autre de la portion flexible, les deux parois 10 latérales peuvent être formées chacune par un rouleau rotatif autour d'un axe vertical.

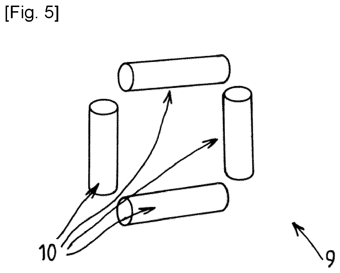

Comme illustré à la [Fig. 5], l'ensemble de paroi(s) 10 déflectrice(s) peut comprendre une paroi supérieure orientée horizontalement (notamment un rouleau rotatif autour d'un axe horizontal) et formant une butée verticale au-dessus de la portion flexible et/ou une paroi inférieure orientée horizontalement (notamment un rouleau rotatif autour d'un axe horizontal) et formant une butée verticale en-dessous de la portion flexible.

Cette configuration permet de reporter dans l'axe de travail du raccord 7 de sécurité aussi bien les tractions horizontales du flexible des deux côtés opposés que les tractions sur le flexible vers le haut ou vers le bas. Ceci permet le report des composantes verticales et horizontales des efforts de traction. Bien entendu, l'axe de travail du raccord 7 de sécurité n'est pas nécessairement horizontal.

De plus, ce raccord 7 de sécurité et l'organe 9 de guidage pourrait être disposés à une hauteur quelconque.

De préférence, ce raccord 7 de sécurité et l'organe 9 de guidage sont fixés à la hauteur usuelle de raccordement de l'extrémité terminale du flexible aux réservoirs (à la hauteur moyenne de l'entrée/sortie du réservoir, par exemple autour d'un mètre).

Dans le cas où le raccord 7 de sécurité est fixé à la hauteur de l'entrée du réservoir à remplir, les parois 10 ou rouleaux horizontaux reportant les composantes verticales des efforts sont facultatifs. Le système de guidage peut donc être encore simplifié.

La longueur du flexible étant généralement de plusieurs mètres, la hauteur du système par rapport à la hauteur moyenne des réservoirs peut varier de plusieurs dizaines de centimètres sans compromettre le fonctionnement. L'angle maximale d'inclinaison du flexible en sortie du système de déflexion restant ainsi inférieur à la valeur préconisée par le fabricant du raccord 7 de sécurité et dans la hauteur utile de l'organe 9 de guidage.

L'invention permet une réduction du nombre de pièces nécessaires (une seule direction de guidage/déflexion si besoin ou, dans le cas du tore, un seul élément de guidage). Une telle structure permet donc une simplification de la structure et de l'assemblage ainsi qu'une amélioration de l'efficacité du système de sécurité tout en étant moins coûteux.

Dans le cas notamment où l'organe 9 de guidage comprend un tore ou demi-tore, cela donne une flexibilité sur la forme du carter 8 distributeur et l'emplacement de l'ensemble raccord 7 de sécurité et organe 9 de guidage.

## Revendications

1. Station de remplissage de réservoirs de gaz comprenant une source (2) de gaz, un circuit (3) comprenant une extrémité amont (4) reliée à la source (2) et une extrémité aval (5) comprenant une portion flexible dont la terminaison est destinée à être raccordée au réservoir(s) (6) à remplir, le circuit (3) comprenant entre la source (2) et l'extrémité aval (5), un raccord (7) de sécurité à fermeture automatique agencé selon un axe de travail, ledit raccord (7) de sécurité assurant une fermeture automatique du circuit (3) en cas de traction déterminée dudit raccord (7) de sécurité selon son axe de travail, la station (1) comprenant un carter (8) de distribution, le raccord (7) de sécurité étant disposé dans le carter (8) de distribution avec orientation déterminée de l'axe de travail, au moins une partie de la portion flexible de l'extrémité (5) aval du circuit faisant saillie hors du carter (8) de distribution, le carter (8) de distribution comprenant un organe (9) de guidage d'une zone de la portion flexible, **caractérisée en ce que** l'organe (9) de guidage comprend un ensemble de paroi(s) (10) déflectrice(s) convergente (s) vers une zone centrale de passage assurant le maintien localisé de la portion flexible, la portion du circuit (3) située entre le raccord (7) de sécurité et l'organe (9) de guidage étant orientée au moins sensiblement selon l'axe de travail du raccord (7) de sécurité, l'ensemble de paroi(s) (10) déflectrice(s) de l'organe (9) de guidage étant configuré pour assurer en outre un report, selon l'axe de travail du raccord (7) de sécurité, d'au moins une partie des efforts de traction sur la portion flexible orientés transversalement par rapport à l'axe de travail du raccord (7) de sécurité.

2. Station selon la revendication 1, **caractérisée en ce que** l'ensemble de paroi(s) (10) déflectrice(s) comprend une ou des parois courbes ayant un rayon de courbure compris entre 5mm et 300mm.

3. Station selon la revendication 1 ou 2, **caractérisée en ce que** l'ensemble de paroi(s) (10) déflectrice(s) comprend au moins une paroi fixe.

4. Station selon l'une quelconque des revendications 1 à 3, **caractérisée en ce que** l'ensemble de paroi(s) (10) déflectrice(s) comprend au moins une paroi mobile, notamment un rouleau monté sur un axe mobile en rotation sur lui-même.

5. Station selon l'une quelconque des revendications 1 à 4, **caractérisée en ce que** l'ensemble de paroi(s) (10) déflectrice(s) comprend au moins deux parois latérales orientée verticalement et formant des butées latérales de part et d'autre de la portion flexible.

6. Station selon l'une quelconque des revendications 1 à 5, **caractérisée en ce que** l'ensemble de paroi(s) (10) déflectrice(s) comprend au moins l'un parmi : une paroi supérieure orientée horizontalement et formant une butée verticale au-dessus de la portion flexible, une paroi inférieure orientée horizontalement et formant une butée verticale en-dessous de la portion flexible.

7. Station selon l'une quelconque des revendications 1 à 6, **caractérisée en ce que** le raccord (7) de sécurité est disposé dans le carter (8) avec orientation parallèle ou sensiblement parallèle à l'axe de travail.

8. Station selon l'une quelconque des revendications 1 à 7, **caractérisée en ce que** le raccord (7) de sécurité est disposé dans le carter (8) à une hauteur comprise entre 5cm et 3m et de préférence entre 50cm et 1m par rapport au sol.

9. Station selon l'une quelconque des revendications 1 à 8, **caractérisée en ce que** la source (2) de gaz contient un gaz carburant comprenant ou constitué d'hydrogène sous forme liquide et/ou sous forme gazeuse.

## Patentansprüche

1. Füllstation für Gastanks, welche eine Gasquelle (2) umfasst, wobei eine Leitung (3) ein mit der Quelle (2) verbundenes stromaufwärtiges Ende (4) und ein stromabwärtiges Ende (5), das einen flexiblen Abschnitt umfasst, dessen Endstück dazu bestimmt ist, an den (die) zu füllenden Tank(s) (6) angeschlossen zu werden, umfasst, wobei die Leitung (3) zwischen der Quelle (2) und dem stromabwärtigen Ende (5) eine automatisch schließende Sicherheitskupplung (7) umfasst, die entlang einer Arbeitsachse angeordnet ist, wobei die Sicherheitskupplung (7) ein automatisches Schließen der Leitung (3) im Falle eines bestimmten Zuges an der Sicherheitskupplung (7) entlang ihrer Arbeitsachse sicherstellt, wobei die Station (1) ein Abgabegehäuse (8) umfasst, wobei die Sicherheitskupplung (7) in dem Abgabegehäuse (8) mit einer bestimmten Ausrichtung der Arbeitsachse angeordnet ist, wobei wenigstens ein Teil des flexiblen Abschnitts des stromabwärtigen Endes (5) der Leitung aus dem Abgabegehäuse (8) herausragt, wobei das Abgabegehäuse (8) ein Führungsorgan (9) für einen Bereich des flexiblen Abschnitts umfasst, **dadurch gekennzeichnet, dass** das Führungsorgan (9) eine Anordnung einer Ablenkwand (von Ablenkwänden) (10) umfasst, die zu einem zentralen Durchgangsbereich hin verläuft (zusammenlaufen) und das lokale Halten des flexiblen Abschnitts sicherstellt (sicherstellen), wobei der Abschnitt der Leitung (3), der sich zwischen der Sicherheitskupplung (7) und dem Führungsorgan (9) befindet, wenigstens im Wesentlichen entlang der Arbeitsachse der Sicherheitskupplung (7) ausgerichtet ist, wobei die Anordnung einer Ablenkwand (von Ablenkwänden) (10) des Führungsorgans (9) dafür ausgelegt ist, außerdem eine Umlenkung wenigstens eines Teils der auf den flexiblen Abschnitt ausgeübten Zugkräfte, die quer bezüglich der Arbeitsachse der Sicherheitskupplung (7) ausgerichtet sind, in Richtung der Arbeitsachse der Sicherheitskupplung (7) sicherzustellen.

2. Station nach Anspruch 1, **dadurch gekennzeichnet, dass** die Anordnung einer Ablenkwand (von Ablenkwänden) (10) eine oder mehrere gekrümmte Wände mit einem Krümmungsradius zwischen 5 mm und 300 mm umfasst.

3. Station nach Anspruch 1 oder 2, **dadurch gekennzeichnet, dass** die Anordnung einer Ablenkwand (von Ablenkwänden) (10) wenigstens eine ortsfeste Wand umfasst.

4. Station nach einem der Ansprüche 1 bis 3, **dadurch gekennzeichnet, dass** die Anordnung einer Ablenkwand (von Ablenkwänden) (10) wenigstens eine bewegliche Wand umfasst, insbesondere eine Rolle, die auf einer um sich selbst drehbaren Achse gelagert ist.

5. Station nach einem der Ansprüche 1 bis 4, **dadurch gekennzeichnet, dass** die Anordnung einer Ablenkwand (von Ablenkwänden) (10) wenigstens zwei seitliche Wände umfasst, die vertikal ausgerichtet sind und seitliche Anschläge beiderseits des flexiblen Abschnitts bilden.

6. Station nach einem der Ansprüche 1 bis 5, **dadurch gekennzeichnet, dass** die Anordnung einer Ablenkwand (von Ablenkwänden) (10) wenigstens eines umfasst von: einer oberen Wand, die horizontal ausgerichtet ist und einen vertikalen Anschlag oberhalb des flexiblen Abschnitts bildet, und einer unteren Wand, die horizontal ausgerichtet ist und einen vertikalen Anschlag unterhalb des flexiblen Abschnitts bildet.

7. Station nach einem der Ansprüche 1 bis 6, **dadurch gekennzeichnet, dass** die Sicherheitskupplung (7) in dem Gehäuse (8) mit einer zur Arbeitsachse parallelen oder im Wesentlichen parallelen Ausrichtung angeordnet ist.

8. Station nach einem der Ansprüche 1 bis 7, **dadurch gekennzeichnet, dass** die Sicherheitskupplung (7) in dem Gehäuse (8) auf einer Höhe zwischen 5 cm und 3 m und vorzugsweise zwischen 50 cm und 1 m in Bezug auf den Boden angeordnet ist.

9. Station nach einem der Ansprüche 1 bis 8, **dadurch gekennzeichnet, dass** die Gasquelle (2) ein Brenngas enthält, das Wasserstoff in flüssiger Form und/oder in Gasform umfasst oder aus diesem besteht.

## Claims

1. Station for filling gas tanks comprising a gas source (2), a circuit (3) comprising an upstream end (4) connected to the source (2) and a downstream end (5) comprising a hose portion, the end of which is intended to be connected to the tank(s) (6) to be filled, the circuit (3) comprising, between the source (2) and the downstream end (5), an automatic shut-off breakaway coupling (7) arranged along a working axis, said breakaway coupling (7) ensuring an automatic shut-off of the circuit (3) in case of a determined tensile force on said breakaway coupling (7) along its working axis, the station (1) comprising a dispenser housing (8), the breakaway coupling (7) being arranged in the dispenser housing (8) with a determined orientation of the working axis, at least one part of the hose portion of the downstream end (5) of the circuit protruding from the dispenser housing (8), the dispenser housing (8) comprising a guide member (9) for guiding a zone of the hose portion, **characterized in that** the guide member (9) comprises an assembly of deflecting wall(s) (10) converging toward a central passage zone ensuring the localized retention of the hose portion, the portion of the circuit (3) located between the breakaway coupling (7) and the guide member (9) being oriented at least substantially along the working axis of the breakaway coupling (7), the assembly of deflecting wall(s) (10) of the guide member (9) being further configured to transfer, along the working axis of the breakaway coupling (7), at least part of the tensile forces on the hose portion that are oriented transversely with respect to the working axis of the breakaway coupling (7).

2. Station according to Claim 1, **characterized in that** the assembly of deflecting wall(s) (10) comprises one or more curved walls having a radius of curvature comprised between 5 mm and 300 mm.

3. Station according to Claim 1 or 2, **characterized in that** the assembly of deflecting wall(s) (10) comprises at least one fixed wall.

4. Station according to any one of Claims 1 to 3, **characterized in that** the assembly of deflecting wall(s) (10) comprises at least one movable wall, in particular a roller mounted on a moveable axis and rotating thereon.

5. Station according to any one of Claims 1 to 4, **characterized in that** the assembly of deflecting wall(s) (10) comprises at least two vertically oriented lateral walls forming lateral stops on each side of the hose portion.

6. Station according to any one of Claims 1 to 5, **characterized in that** the assembly of deflecting wall(s) (10) comprises at least one of the following: an upper wall oriented horizontally and forming a vertical stop above the hose portion, a lower wall oriented horizontally and forming a vertical stop below the hose portion.

7. Station according to any one of Claims 1 to 6, **characterized in that** the breakaway coupling (7) is arranged in the housing (8) with an orientation parallel or substantially parallel to the working axis.

8. Station according to any one of Claims 1 to 7, **characterized in that** the breakaway coupling (7) is arranged in the housing (8) at a height comprised between 5 cm and 3 m and preferably between 50 cm and 1 m from the ground.

9. Station according to any one of Claims 1 to 8, **characterized in that** the gas source (2) contains a fuel gas comprising or consisting of hydrogen in liquid and/or gaseous form.
